# EUROPÄISCHE PATENTANMELDUNG

(11) **EP 1 149 745 A1**
(43) Veröffentlichungstag der Anmeldung: **31.10.2001**
(21) Anmeldenummer: 01104672.9
(22) Anmeldetag: 24.02.2001
(51) Int. Cl.: B60S 1/08

(54) **Vorrichtung zur Reinigung von optoelektronischen Sensorsystemen**

(30) Priorität: 26.04.2000 DE 10020331
(71) Anmelder: ROBERT BOSCH GMBH, 70442 Stuttgart (DE)
(72) Erfinder: Braeuchle, Goetz, 74934 Reichartshausen (DE); Heinebrodt, Martin, 70176 Stuttgart (DE); Boecker, Juergen, 70499 Stuttgart (DE)

(57) **Zusammenfassung**

Sensoreinrichtung, insbesondere für ein Kraftfahrzeug mit einer Frontscheibe, mit einem, insbesondere optischen, Sensor (12) zur Beobachtung der Umwelt, dadurch gekennzeichnet, daß ein im wesentlichen dem Sensor (12) dienendes Reinigungssystem (18), zur Reinigung optischer Elemente (16) im Erfassungbereich (14) der Sensors (12) vorgesehen ist.

## Beschreibung

### Stand der Technik

Die Erfindung betrifft eine Sensoreinrichtung, insbesondere für ein Kraftfahrzeug nach Gattung des unabhängigen Anspruchs. Aus der DE 38 01 368 A1 ist schon eine Sensorvorrichtung für ein Kraftfahrzeug bekannt bei welcher mit einer Videokamera und einem Auswerterechner die Sichtweite oder andere Parameter aufgrund des Schwarzweiß- und/oder Farbkontrasts bestimmt werden. Diese Signale finden beispielsweise in einer automatischen Fahrzeugsteuerung verwendung.

Die Videokamera wird üblicherweise so angeordnet, daß sie in dem Bereich durch die Windschutzscheibe blickt durch den auch der Fahrzeuglenker blickt.

### Vorteile der Erfindung

Die erfindungsgemäße Sensoreinrichtung mit den kennzeichnenden Merkmalen des Hautanspruchs hat den Vorteil, daß durch ein im Wesentlichen dem Sensor dienendes Reinigungssystem die freie Sicht des optischen Sensors zu jeder Zeit gewährleistet ist.

Dies ist insbesondere vorteilhaft, wenn die Lichtverhältnisse schlecht sind oder beispielsweise bei Dämmerung oder Dunkelheit nur die eigene Fahrzeugbeleuchtung als Lichtquelle dienen kann.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die Funktion und der Reinigungsbereich des Reinigungssystems auf den Sensor abgestimmt sind. Auf diese Weise kann beispielsweise die Reinigungsaktivität sowie der Reinigungsbereich speziell auf die Bedürfnisse des Sensors abgestimmt sein.

Darüber hinaus ist es vorteilhaft wenn als Sensor eine Videokamera vorgesehen ist, da diese als kostengünstige Massenware in verschiedensten Ausführungsvarianten zur Verfügung steht. Weiterhin ist es vorteilhaft wenn der Sensor die Umwelt durch die Frontscheibe hindurch erfaßt. Der Sensor ist dadurch innerhalb des Fahrzeugs leicht zugänglich, was die Wartungsfreundlichkeit wesentlich erhöht. Dadurch das der Sensor den selben Erfassungsbereich aufweist wie das Sichtfeld des Fahrzeuglenkers, kann auf dessen Bedürfnisse besonders Rücksicht genommen werden.

Ist das Reinigungssystem durch die Signale des Sensors beeinflußbar, so kann das Reinigungssystem gezielt in Abhängigkeit der Bedürfnisse des Sensors ein- und ausgeschaltet werden.

Ist das Reinigungssystem darüber hinaus als zusätzliches Scheibenwischersystem mit Wisch- Waschanlage ausgebildet, so kann ein bekanntes und bewährtes Mittel zur Reinigung verwendet werden.

Von besonderem Vorteil ist es, wenn vor oder auf dem Sensor, auf der der Umwelt zugewandten Seite, die Oberfläche hydrophob ausgestaltet ist. Diese hydrophoben Oberflächen sind generell wasser- und schmutzabweisend, wodurch immer eine optimale Sicht des Sensors gewährleistet ist.

### Zeichnungen

Ein Ausführungsbeispiel der Erfindung ist in den Zeichnungen dargestellt und in der nachfolgenden Beschreibung näher erläutert. Es zeigen:
Figur 1 ein Kraftfahrzeug mit einer erfindungsgemäßen Sensoreinrichtung und
Figur 2 eine schematische Darstellung der Sensoreinrichtung mit Reinigungseinrichtung.

### Beschreibung des Ausführungsbeispiels

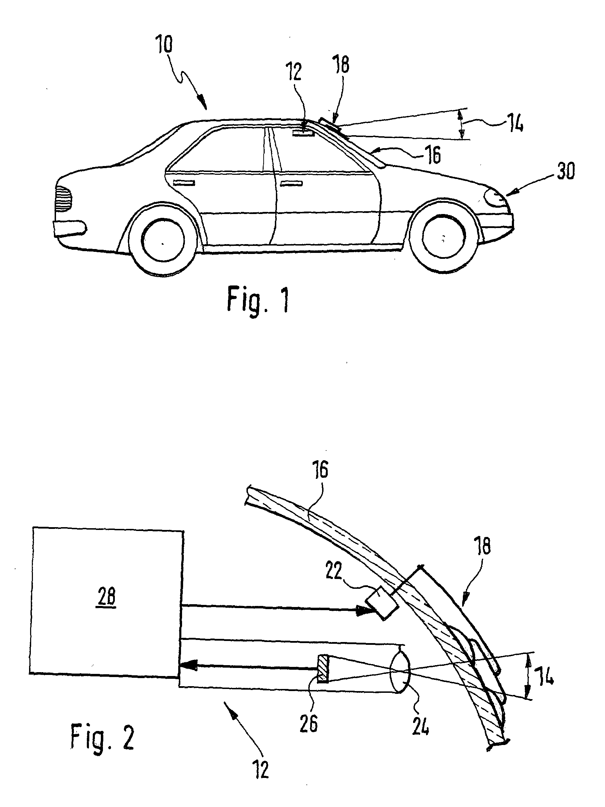

Figur 1 zeigt ein Kraftfahrzeug 10 mit einer Sensoreinrichtung 12 in deren Erfassungsbereich 14 sich eine Windschutzscheibe 16 des Kraftfahrzeugs 10 befindet. Der Erfassungsbereich 14 der Sensoreinrichtung 12 durchtritt die Windschutzscheibe 16 als optisches Element in einem kleinen Bereich, auf dem ein Reinigungssystem 18 angeordnet ist. Dieser Bereich ist typischerweise wesentlich kleiner als der Sichtbereich des Fahrzeugführers, der fast die gesamte Windschutzscheibe 16 umfaßt.

In Figur 2 ist die Windschutzscheibe 16 mit der Sensoreinrichtung 12 und dem Reinigungssystem 18 dargestellt. Dabei ist im Erfassungsbereich 14 auf der Windschutzscheibe 16 ein kleiner Scheibenwischer 20 angeordnet, der von einem Wischermotor 22 angetrieben wird.

Die Sensoreinrichtung 12 steuert den Wischermotor 22 selbst, nach den Gesichtspunkten, die für eine optimale Sicht der Sensoreinrichtung 12 entscheidend sind. Die Sensoreinrichtung 12 ist dabei als Videokamera ausgebildet welche ein Linsensystem 24, ein CCD-Element 26 und eine Steuereinrichtung 28 aufweist.

In einer Variation kann die Sensoreinrichtung beispielsweise auch im Bereich des Kühlers 30 (Figur 1) oder an beliebiger anderer Stelle des Kraftfahrzeuges 10 angeordnet sein. Ebenfalls ist es möglich den Sensor als Wärmebildkamera oder als UV-Kamera auszubilden, wobei das Reinigungssystem 18 dabei für den jeweiligen Zweck auswählt und angepaßt ist. Insbesondere kann die Windschutzscheibe 16 im Erfassungsbereich 14 auch mit einer schmutz- und feuchtigkeitsabweisenden, hydrophoben Oberfläche versehen sein, welche Feuchtigkeit und Schmutz nicht anhaften läßt. In diesem Fall würde eine Scheibenwischeinrichtung nicht benötigt, da die hydrophobe Oberfläche als Reinigungssystem 18 dient.

## Patentansprüche

1. Sensoreinrichtung, insbesondere für ein Kraftfahrzeug mit einer Frontscheibe, mit einem, insbesondere optischen, Sensor (12) zur Beobachtung der Umwelt, **dadurch gekennzeichnet, daß** ein im Wesentlichen dem Sensor (12) dienendes Reinigungssystem (18), zur Reinigung optischer Elemente (16) im Erfassungbereich (14) der Sensors (12) vorgesehen ist.

2. Sensoreinrichtung nach Anspruch 1, **dadurch gekennzeichnet, daß** die Funktion und der Reinigungsbereich des Reinigungsystems (18) auf den Sensor (12) abgestimmt sind.

3. Sensoreinrichtung nach Anspruch 1 oder 2, **dadurch gekennzeichnet, daß** eine Videokamera als Sensor (12) vorgesehen ist.

4. Sensoreinrichtung nach einem der vorhergehenden Ansprüche, **dadurch gekennzeichnet, daß** der Sensor (12) die Umwelt durch die Frontscheibe als optisches Element (16) hindurch erfasst.

5. Sensoreinrichtung nach einem der vorhergehenden Ansprüche, **dadurch gekennzeichnet, daß** das Reinigungssystem (18) durch Signale des Sensors (12) beeinflußbar ist.

6. Sensoreinrichtung nach einem der vorhergehenden Ansprüche, **dadurch gekennzeichnet, daß** das Reinigungssystem (18) als zusätzliches Scheibenwischersystem (20) ausgebildet ist.

7. Sensoreinrichtung nach einem der vorhergehenden Ansprüche, **dadurch gekennzeichnet, daß** vor oder auf dem Sensor (12) eine zur Umwelt weisende, schmutzabweisende, insbesondere hydrophobe Oberfläche angeordnet ist.
